# EUROPEAN PATENT APPLICATION

(11) **EP 4 047 940 A1**
(43) Date of publication of application: **24.08.2022**
(21) Application number: 20889923.7
(22) Date of filing: 17.11.2020
(51) Int. Cl.: H04N 21/436

(54) **SCREENCAST CONTROL METHOD AND ELECTRONIC DEVICE**

(30) Priority: 22.11.2019 CN 201911155561
(71) Applicant: Vivo Mobile Communication Co., Ltd., Dongguan, Guangdong 523863 (CN)
(72) Inventor: WANG, Guozhi, Dongguan, Guangdong 523863 (CN)
(74) Representative: Murgitroyd & Company
(86) International application number: PCT/CN2020/129341
(87) International publication number: WO 2021/098678

(57) **Abstract**

Provided in the present invention are a screencast control method and an electronic device, the method comprising: when an electronic device establishes a communication connection with a screencast display device, displaying a target control; receiving a first operation on the target control and, in response to the first operation, determining a target application to be screencast; by means of the communication connection, sending the display content of the target application to the screencast display device for display; receiving a second operation on the target control and, in response to the second operation, switching the target application to running in the background.

## Description

### TECHNICAL FIELD

The present invention relates to the field of communication technologies, and in particular, to a screen projection control method and an electronic device.

### BACKGROUND

With the popularization of smartphones, smart TVs, and computers, more and more display devices support the screen projection function of mobile phones. Consumers want to share movies or photos and play games with friends through screen projection of mobile phones. However, after the screen of a mobile phone is projected to a display screen, every operation and exchanged message on the mobile phone are also displayed on the display screen, and personal privacy is prone to be leaked.

### SUMMARY

Embodiments of the present invention provide a screen projection control method and an electronic device, to solve the related-art problem that personal privacy is leaked when displayed content of an electronic device is projected to a display device.

To solve the foregoing technical problem, the present invention is implemented as follows: a screen projection control method is provided, applied to an electronic device and including:
displaying a target control when the electronic device establishes a communication connection with a screen projection display device;
receiving a first operation performed on the target control, and determining a to-be-proj ected target application in response to the first operation;
sending displayed content of the target application to the screen projection display device through the communication connection for display; and
receiving a second operation performed on the target control, and switching the target application to run in the background in response to the second operation.

The embodiments of the present invention further provide an electronic device, including:
a display module, configured to display a target control when the electronic device establishes a communication connection with a screen projection display device;
a determining module, configured to receive a first operation performed on the target control, and determine a to-be-projected target application in response to the first operation;
a screen projection module, configured to send displayed content of the target application to the screen projection display device through the communication connection for display; and
a first switching module, configured to receive a second operation performed on the target control, and switch the target application to run in the background in response to the second operation.

Embodiments of the present invention further provide an electronic device, including a processor, a memory, and a computer program stored in the memory and executable on the processor. The computer program, when executed by the processor, implements the steps of the foregoing screen projection control method.

Embodiments of the present invention further provide a computer-readable storage medium. The computer-readable storage medium stores a computer program, and the computer program, when executed by a processor, implements the steps of the foregoing screen projection control method.

In the embodiments of the present invention, in a screen projection mode, the target application for screen projection is switched to run in the background through the target control, and subsequent operations performed by a user on the electronic device and content displayed on the electronic device in response to the operation are not projected to the screen projection display device, so that the electronic device and the screen projection display device display on separate screens and the privacy of the owner of the electronic device is protected.

### BRIEF DESCRIPTION OF DRAWINGS

To describe the technical solutions of the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a flowchart of steps of a screen projection control method according to an embodiment of the present invention;
FIG. 2 is a schematic diagram 1 of display on an electronic device in a screen projection control method according to an embodiment of the present invention;
FIG. 3 is a schematic diagram 2 of display on an electronic device in a screen projection control method according to an embodiment of the present invention;
FIG. 4 is a schematic structural diagram 1 of an electronic device according to an embodiment of the present invention; and
FIG. 5 is a schematic structural diagram 2 of an electronic device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

In the embodiments of the present invention, the term such as "exemplary" or "for example" is used to represent an example, an instance, or a description. Any embodiment or design solution described as "exemplary" or "for example" in the embodiments of the present invention should not be construed as being more preferred or advantageous than other embodiments or design solutions. To be precise, the use of the term such as "exemplary" or "for example" is intended to present a related concept in a specific manner.

The electronic device provided in the embodiments of the present invention may be a mobile phone, a tablet computer, a notebook computer, an ultra-mobile personal computer (Ultra-Mobile Personal Computer, UMPC), a netbook, a wearable device (Wearable Device), a vehicle-mounted device, a personal digital assistant (Personal Digital Assistant, PDA), or the like. It should be noted that a specific type of the electronic device is not limited in the embodiments of the present invention.

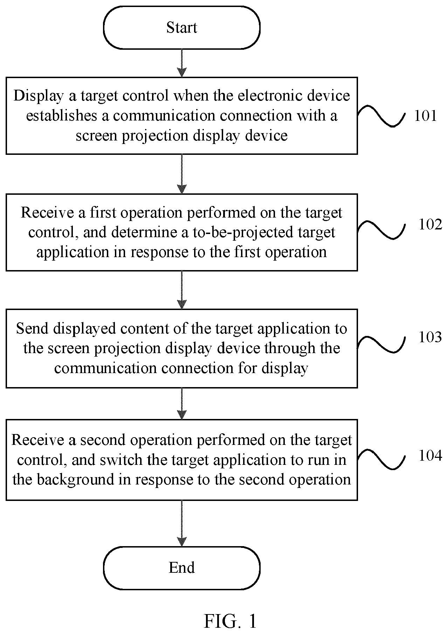

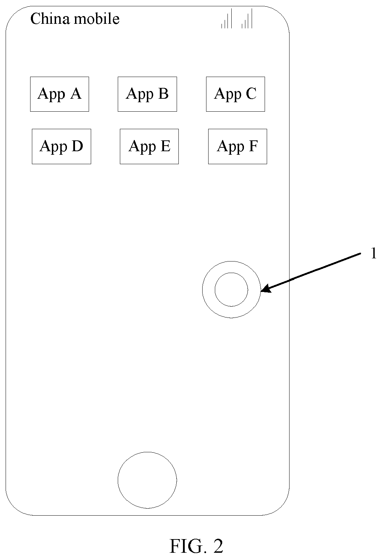

As shown in FIG. 1, an embodiment of the present invention provides a screen projection control method, applied to an electronic device and including:
step 101: Display a target control 1 (as shown in FIG. 2) when the electronic device establishes a communication connection with a screen projection display device.

Optionally, the target control may be a floating button.

Step 102: Receive a first operation performed on the target control 1, and determine a to-be-proj ected target application in response to the first operation.

Step 103: Send displayed content of the target application to the screen projection display device through the communication connection for display.

Step 104: Receive a second operation performed on the target control 1, and switch the target application to run in the background in response to the second operation.

In the embodiments of the present invention, during screen projection, the electronic device and the screen projection display device display on separate screens. This prevents important private information of the electronic device from being projected to the screen projection display device, and can protect the privacy of the user of the electronic device. Through the above function, the user can fully enjoy watching movies or the like on the screen projection display device while using the electronic device as usual.

Optionally, in the embodiments of the present invention, as shown in FIG. 2, the first operation includes:
dragging the target application to the target control 1, for example, the target application may be any one of APP A, APP B, APP C, APP D, APP E, and APP F in FIG. 2.

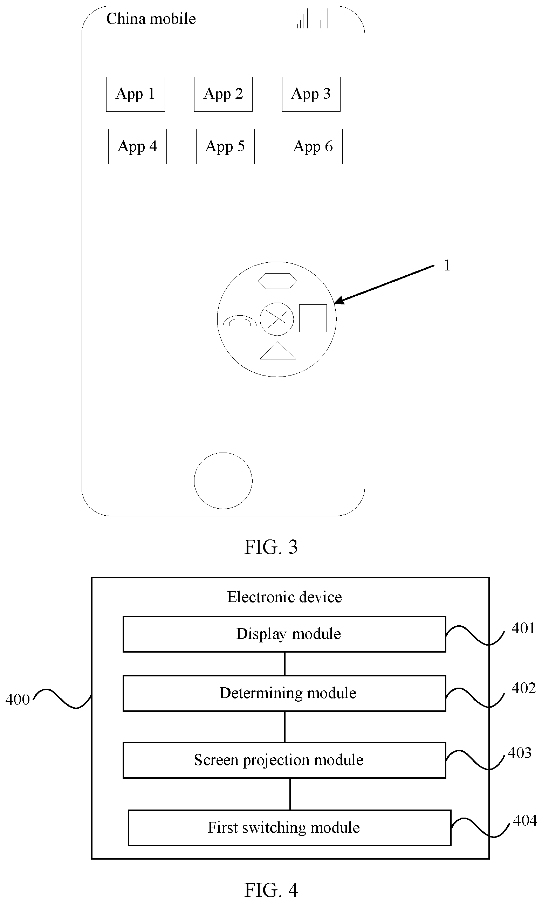

Alternatively, the first operation includes:
clicking on an application selection key of the target control 1, to select the target application through the application selection key, for example, as shown in FIG. 3, the application selection key of the target control 1 is a rectangular key in FIG. 3, and the rectangular key is clicked on to select the target application.

Optionally, the second operation includes: clicking on a screen separation key of the target control. For example, as shown in FIG. 3, the screen separation key is a triangular key in FIG. 3. After the triangular key is activated, the triangular key is in a preset color. The preset color is used to indicate that the electronic device has currently activated a screen separation (the electronic device and the screen projection display device display on separate screens) function. After the triangular key is clicked on, the target application of the electronic device is hidden in the background, and the screen projection display device normally plays the displayed content of the target application running in the background.

Optionally, after step 104, the method further includes:
displaying a home screen of the electronic device; and
receiving a third operation performed on the home screen, and in response to the third operation, running, in the foreground, an application corresponding to the third operation.

For example, if the user of the electronic device clicks on an application other than the selected target application on the home screen, the currently operated application runs in the foreground, and the application currently running in the foreground is not projected to the corresponding screen projection display device.

In an optional embodiment, after step 104, the method further includes:
receiving a fourth operation performed on the target control, and switching the target application to run in the foreground in response to the fourth operation.

For example, the fourth operation includes: clicking on the screen separation key of the target control again. For example, as shown in FIG. 3, the screen separation key is the triangular key in FIG. 3. After the triangular key is clicked on again, the triangular key is in a color different from the preset color. The color is used to indicate that the electronic device has currently disabled a screen separation (the electronic device and the screen projection display device display on separate screens) function. After the triangular key is clicked on, the target application is switched to run in the foreground of the electronic device, and the screen projection display device normally plays the displayed content of the target application running in the foreground.

As another optional embodiment, after step 104, the method further includes:
receiving a fifth operation performed on the target control 1, and in response to the fifth operation, stopping sending the displayed content of the target application to the screen projection display device and hiding the target control.

As shown in FIG. 3, the fifth operation is to click on a disabling key (that is, a cross key in FIG. 3) of the target control 1, and the screen projection function is disabled and the target control disappears.

In conclusion, in the embodiments of the present invention, in a screen projection mode, the target application for screen projection is switched to run in the background through the target control, and subsequent operations performed by a user on the electronic device and content displayed on the electronic device in response to the operation are not projected to the screen projection display device, so that the electronic device and the screen projection display device display on separate screens and the privacy of the owner of the electronic device is protected.

As shown in FIG. 4, an embodiment of the present invention further provides an electronic device 400, including:
a display module 401, configured to display a target control when the electronic device establishes a communication connection with a screen projection display device;
a determining module 402, configured to receive a first operation performed on the target control, and determine a to-be-projected target application in response to the first operation;
a screen projection module 403, configured to send displayed content of the target application to the screen projection display device through the communication connection for display; and
a first switching module 404, configured to receive a second operation performed on the target control, and switch the target application to run in the background in response to the second operation.

Optionally, in the above embodiment of the present invention, the second operation includes:
clicking on a screen separation key of the target control.

Optionally, in the above embodiment of the present invention, the electronic device further includes:
a screen display module, configured to display a home screen of the electronic device; and
a running module, configured to receive a third operation performed on the home screen, and in response to the third operation, run, in the foreground, an application corresponding to the third operation.

Optionally, in the above embodiment of the present invention, the electronic device further includes:
a second switching module, configured to receive a fourth operation performed on the target control, and switch the target application to run in the foreground in response to the fourth operation.

Optionally, in the above embodiment of the present invention, the electronic device further includes:
a hiding module, configured to receive a fifth operation performed on the target control, and in response to the fifth operation, stop sending the displayed content of the target application to the screen projection display device and hide the target control.

The electronic device provided in this embodiment of the present invention can implement the processes implemented by the electronic device in the method embodiments in FIG. 1 to FIG. 3. To avoid repetition, details are not described herein again.

In conclusion, in the embodiments of the present invention, in a screen projection mode, the target application for screen projection is switched to run in the background through the target control, and subsequent operations performed by a user on the electronic device and content displayed on the electronic device in response to the operation are not projected to the screen projection display device, so that the electronic device and the screen projection display device display on separate screens and the privacy of the owner of the electronic device is protected.

It should be noted that the electronic device provided in the embodiments of the present invention is an electronic device capable of executing the foregoing screen projection control method, and all embodiments of the foregoing screen projection control method are applicable to the electronic device, and can achieve same or similar beneficial effects.

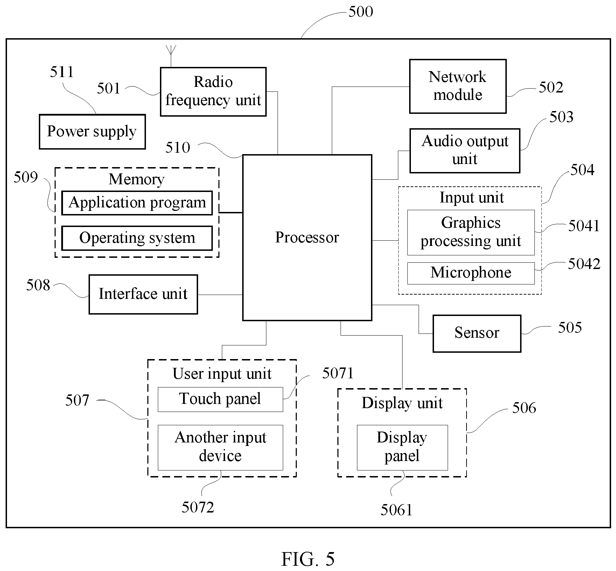

FIG. 5 is a schematic structural diagram of hardware of an electronic device implementing the embodiments of the present invention. The electronic device 500 includes but is not limited to: a radio frequency unit 501, a network module 502, an audio output unit 503, an input unit 504, a sensor 505, a display unit 506, a user input unit 507, an interface unit 508, a memory 509, a processor 510, a power supply 511, and other components. A person skilled in the art may understand that the structure of the electronic device shown in FIG. 5 constitutes no limitation on the electronic device. The electronic device may include more or fewer components than those shown in the figure, or a combination of some components, or an arrangement of different components. In this embodiment of the present invention, the electronic device includes but is not limited to a mobile phone, a tablet computer, a notebook computer, a palmtop computer, an in-vehicle terminal, a wearable device, a pedometer, and the like.

The processor 510 is configured to display a target control when the electronic device establishes a communication connection with a screen projection display device; receive a first operation performed on the target control, and determine a to-be-projected target application in response to the first operation.

The radio frequency unit 501 is configured to send displayed content of the target application to the screen projection display device through the communication connection for display.

The processor 510 is further configured to receive a second operation performed on the target control, and switch the target application to run in the background in response to the second operation.

In conclusion, in the embodiments of the present invention, in a screen projection mode, the target application for screen projection is switched to run in the background through the target control, and subsequent operations performed by a user on the electronic device and content displayed on the electronic device in response to the operation are not projected to the screen projection display device, so that the electronic device and the screen projection display device display on separate screens and the privacy of the owner of the electronic device is protected.

It should be noted that the electronic device provided in the embodiments of the present invention is an electronic device capable of executing the foregoing screen projection control method, and all embodiments of the foregoing screen projection control method are applicable to the electronic device, and can achieve same or similar beneficial effects.

It should be understood that in this embodiment of the present invention, the radio frequency unit 501 may be configured to receive and transmit information, or receive and transmit signals during a call. Specifically, the radio frequency unit receives downlink data from a base station, and transmits the downlink data to the processor 510 for processing; and in addition, transmits uplink data to the base station. Generally, the radio frequency unit 501 includes, but is not limited to, an antenna, at least one amplifier, a transceiver, a coupler, a low noise amplifier, and a duplexer. In addition, the radio frequency unit 501 may also communicate with a network and other devices through a wireless communication system.

The electronic device provides users with wireless broadband Internet access through the network module 502, for example, helps users receive and send e-mails, browse web pages, and access streaming media.

The audio output unit 503 may convert audio data received by the radio frequency unit 501 or the network module 502 or stored in the memory 509 into an audio signal and output the audio signal as a sound. Moreover, the audio output unit 503 can further provide audio output related to a specific function performed the electronic device 500 (for example, call signal receiving sound and message receiving sound). The audio output unit 503 includes a loudspeaker, a buzzer, a receiver, and the like.

The input unit 504 is configured to receive audio or radio frequency signals. The input unit 504 may include a graphics processing unit (Graphics Processing Unit, GPU) 5041 and a microphone 5042. The graphics processing unit 5041 processes image data of a static image or video obtained by an image capture apparatus (such as, a camera) in a video capture mode or an image capture mode. A processed image frame may be displayed on the display unit 506. The image frame processed by the graphics processing unit 5041 may be stored in the memory 509 (or another storage medium) or sent by using the radio frequency unit 501 or the network module 502. The microphone 5042 may receive sound and can process such sound into audio data. The audio data obtained through processing may be converted, in a telephone call mode, into a format that may be sent to a mobile communication base station via the radio frequency unit 501 for output.

The electronic device 500 further includes at least one sensor 505, for example, a light sensor, a motion sensor, and another sensor. Specifically, the light sensor includes an ambient light sensor and a proximity sensor. The ambient light sensor may adjust brightness of a display panel 5061 according to ambient light brightness. The proximity sensor may switch off the display panel 5061 and/or backlight when the electronic device 500 moves close to an ear. As a motion sensor, an accelerometer sensor may detect magnitude of acceleration in various directions (usually three axes), may detect magnitude and the direction of gravity when stationary, may be configured to identify electronic device postures (such as switching between a landscape mode and a portrait mode, related games, and magnetometer posture calibration), may perform functions related to vibration identification (such as a pedometer and a knock), and the like. The sensor 505 may further include a fingerprint sensor, a pressure sensor, an iris sensor, a molecular sensor, a gyroscope, a barometer, a hygrometer, a thermometer, an infrared sensor, or the like. Details are not described herein again.

The display unit 506 is configured to display information entered by the user or information provided for the user. The display unit 506 may include a display panel 5061, and the display panel 5061 may be configured in a form of liquid crystal display (Liquid Crystal Display, LCD), organic light-emitting diode (Organic Light-Emitting Diode, OLED), or the like.

The user input unit 507 may be configured to receive entered number or character information, and generate key signal input related to user settings and function control of the electronic device. Specifically, the user input unit 507 includes a touch panel 5071 and another input device 5072. The touch panel 5071, also called a touch screen, may collect touch operation on or near the touch panel by users (for example, operation on the touch panel 5071 or near the touch panel 5071 by fingers or any suitable objects or accessories such as a touch pen by the users). The touch panel 5071 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into contact coordinates, sends the contact coordinates to the processor 510, and can receive and execute a command sent by the processor 510. In addition, the touch panel 5071 may be implemented by various types such as a resistive type, a capacitive type, an infrared ray type or a surface acoustic wave type. In addition to the touch panel 5071, the user input unit 507 may further include other input devices 5072. Specifically, the other input devices 5072 may include but are not limited to: a physical keyboard, a function key (such as a volume control key, a switch key), a trackball, a mouse, and a joystick, which is no longer repeated here.

Further, the touch panel 5071 may cover the display panel 5061. After detecting the touch operation on or near the touch panel 5071, the touch panel 5071 transmits the touch operation to the processor 510 to determine a type of a touch event, and then the processor 510 provides corresponding visual output on the display panel 5061 based on the type of the touch event. Although in FIG. 5, the touch panel 5071 and the display panel 5061 are configured as two independent components to implement input and output functions of the electronic device, in some embodiments, the touch panel 5071 and the display panel 5061 can be integrated to implement the input and output functions of the electronic device. Details are not limited herein.

The interface unit 508 is an interface for connecting an external apparatus and the electronic device 500. For example, the external apparatus may include a wired or wireless headset jack, an external power supply (or a battery charger) port, a wired or wireless data port, a storage card port, a port for connecting an apparatus having an identification module, an audio input/output (I/O) port, a video I/O port, a headset jack, or the like. The interface unit 508 can be configured to receive input from an external apparatus (for example, data information and power) and transmit the received input to one or more elements in the electronic device 500, or can be configured to transmit data between the electronic device 500 and the external apparatus.

The memory 509 may be configured to store a software program and various data. The memory 509 may mainly include a program storage area and a data storage area. The program storage area may store an operating system, an application required by at least one function (for example, a sound play function or an image display function), and the like. The data storage area may store data (for example, audio data or an address book) or the like created based on use of the mobile phone. In addition, the memory 509 may include a high-speed random access memory or a nonvolatile memory, for example, at least one disk storage device, a flash memory, or other volatile solid-state storage devices.

The processor 510 is a control center of the electronic device and connects all parts of the electronic device using various interfaces and circuits. By running or executing software programs and/or modules stored in the memory 509 and by calling data stored in the memory 509, the processor 510 implements various functions of the electronic device and processes data, thus performing overall monitoring on the electronic device. The processor 510 may include one or more processing units. Preferably, an application processor and a modem processor may be integrated into the processor 510. The application processor mainly processes an operating system, a user interface, an application program, and the like. The modem processor mainly processes wireless communications. It may be understood that the modem processor may not be integrated into the processor 510.

The electronic device 500 may further include the power supply 511 (such as a battery) supplying power to each component. Preferably, the power supply 511 may be logically connected to the processor 510 by using a power management system, so as to implement functions such as charging management, discharging management and power consumption management by using the power management system.

In addition, the electronic device 500 includes some functional modules not shown. Details are not described herein again.

Preferably, an embodiment of the present invention further provides an electronic device, including a processor, a memory, and a computer program stored in the memory and executable on the processor. The computer program implements, when executed by the processor, each process of the foregoing embodiments of the screen projection control method, and a same technical effect can be achieved. To avoid repetition, details are not described herein.

An embodiment of the present invention further provides a computer-readable storage medium. The computer-readable storage medium stores a computer program. The computer program implements, when executed by a processor, each process of the foregoing embodiments of the screen projection control method, and a same technical effect can be achieved. To avoid repetition, details are not described herein again. The computer-readable storage medium is a read-only memory (Read-Only Memory, ROM), a random access memory (Random Access Memory, RAM), a magnetic disk, an optical disc, or the like.

It should be noted that in this specification, the terms "comprise", "include" and any other variants thereof are intended to cover non-exclusive inclusion, so that a process, a method, an article, or a device that includes a series of elements not only includes these very elements, but may also include other elements not expressly listed, or also include elements inherent to this process, method, article, or device. Without more restrictions, an element defined by the statement "including a..." does not exclude another same element in this process, method, article, or apparatus that includes the element.

Based on the foregoing descriptions of the embodiments, a person skilled in the art may clearly understand that the method in the foregoing embodiment may be implemented by software in addition to a necessary universal hardware platform or by hardware only. In most circumstances, the former is a preferred implementation manner. Based on such an understanding, the technical solutions of the present invention essentially or the part contributing to the prior art may be implemented in a form of a software product. The computer software product is stored in a storage medium (such as a ROM/RAM, a magnetic disk, or an optical disc), and includes several instructions for instructing an electronic device (which may be a mobile phone, a computer, a server, an air conditioner, a network device, or the like) to perform the methods described in the embodiments of the present invention.

The embodiments of the present invention are described above with reference to the accompanying drawings, but the present invention is not limited to the foregoing specific implementations, and the foregoing specific implementations are only illustrative and not restrictive. Under the enlightenment of the present invention, a person of ordinary skill in the art can make many forms without departing from the purpose of the present invention and the protection scope of the claims, and all of these fall within the protection of the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A screen projection control method, applied to an electronic device, comprising:
displaying a target control when the electronic device establishes a communication connection with a screen projection display device;
receiving a first operation performed on the target control, and determining a to-be-proj ected target application in response to the first operation;
sending displayed content of the target application to the screen projection display device through the communication connection for display; and
receiving a second operation performed on the target control, and switching the target application to run in background in response to the second operation.

2. The method according to claim 1, wherein after the switching the target application to run in the background, the method further comprises:
displaying a home screen of the electronic device; and
receiving a third operation performed on the home screen, and in response to the third operation, running, in foreground, an application corresponding to the third operation.

3. The method according to claim 1, wherein after the switching the target application to run in the background, the method further comprises:
receiving a fourth operation performed on the target control, and switching the target application to run in the foreground in response to the fourth operation.

4. The method according to claim 1, wherein after the switching the target application to run in the background, the method further comprises:
receiving a fifth operation performed on the target control, and in response to the fifth operation, stopping sending the displayed content of the target application to the screen projection display device and hiding the target control.

5. An electronic device, comprising:
a display module, configured to display a target control when the electronic device establishes a communication connection with a screen projection display device;
a determining module, configured to receive a first operation performed on the target control, and determine a to-be-projected target application in response to the first operation;
a screen projection module, configured to send displayed content of the target application to the screen projection display device through the communication connection for display; and
a first switching module, configured to receive a second operation performed on the target control, and switch the target application to run in background in response to the second operation.

6. The electronic device of claim 5, wherein the electronic device further comprises:
a screen display module, configured to display a home screen of the electronic device; and
a running module, configured to receive a third operation performed on the home screen, and in response to the third operation, run, in foreground, an application corresponding to the third operation.

7. The electronic device of claim 5, wherein the electronic device further comprises:
a second switching module, configured to receive a fourth operation performed on the target control, and switch the target application to run in the foreground in response to the fourth operation.

8. The electronic device of claim 5, wherein the electronic device further comprises:
a hiding module, configured to receive a fifth operation performed on the target control, and in response to the fifth operation, stop sending the displayed content of the target application to the screen projection display device and hide the target control.

9. An electronic device, comprising a processor, a memory, and a computer program stored in the memory and executable on the processor, wherein when the computer program is executed by the processor, steps of the screen projection control method according to any one of claims 1 to 4 are implemented.

10. A computer-readable storage medium, wherein the computer-readable storage medium stores a computer program, and when the computer program is executed by a processor, steps of the screen projection control method according to any one of claims 1 to 4 are implemented.
